# FASCICULE DE BREVET EUROPEEN

(11) **EP 0 924 015 B1**
(45) Date de publication et mention de la délivrance du brevet: **27.08.2003**
(21) Numéro de dépôt: 98123099.8
(22) Date de dépôt: 11.12.1998
(51) Int. Cl.: B23K 9/04

(54) **Procédé de revêtement d'une vis d'extrudeuse**
Verfahren zum Beschichten eines Schneckenextruder
Screw extruder coating process

(30) Priorité: 22.12.1997 FR 9716558
(43) Date de publication de la demande: 23.06.1999
(73) Titulaire: Compagnie Générale des Etablissements MICHELIN-MICHELIN & CIE, 63040 Clermont-Ferrand Cedex 09 (FR)
(72) Inventeur: Douris, Christian, 63350 Maringues (FR); Hebuterne, Jean-Louis, 63800 Cournon-d'Auvergne (FR)
(74) Mandataire: Diernaz, Christian

(56) Documents cités:
- EP-A- 0 070 689
- WO-A-95/32831
- US-A- 3 968 533

## Description

L'invention concerne le matériel pour mélanger et/ou de plastification par un travail mécanique et le matériel d'extrusion de différentes matières comme par exemple le caoutchouc. Cette invention concerne plus particulièrement un procédé de revêtement assurant la protection contre l'usure par frottement de contact entre au moins une pièce en rotation et une pièce fixe. Elle concerne également une vis pour extrudeuse pourvue de ce revêtement sur au moins certaines de ses parties en relief.

Sont notamment concernés par l'invention, les filets des vis de malaxage et d'extrusion ainsi que les parties en relief des têtes d'extrusion au voisinage des orifices d'éjection de la matière plastifiée, lesdites parties ayant pour fonction d'éjecter ladite matière.

Le domaine d'application de l'invention n'est bien entendu pas uniquement réservé aux caoutchoucs mais peut être aisément étendu aux matières plastiques et aux mélanges d'élastomères ou à toute matière pouvant être mélangée et extrudée après avoir subi un travail mécanique plus ou moins important.

Dans le domaine de la préparation des mélanges de caoutchouc, on emploie des machines d'extrusion composées d'un cylindre métallique de malaxage dans lequel au moins une vis métallique formée d'un noyau entouré d'un ou plusieurs filets de forme appropriée est mise en rotation.

Par filet, on entend toute partie en relief sur le noyau et destinée à malaxer / à cisailler la/les matière(s) de base afin de pouvoir extruder le mélange obtenu à travers une filière d'un profil donné.

La matière à plastifier est introduite dans le cylindre de malaxage de ladite machine et subit un travail mécanique de déformation (principalement de cisaillement) par la mise en rotation de chaque vis interne; les dimensions de chaque vis et de chaque filet sont fonction du travail nécessaire à la plastification; plus ce travail est important et plus la vis sera de grande longueur devant le diamètre de son noyau. Sous l'action de la rotation de la vis, la matière a tendance à opposer une importante résistance mécanique ce qui entraîne des déformations de flexion plus ou moins importantes du noyau, ledit noyau pouvant alors venir en contact avec la paroi interne du cylindre. De ce contact, il s'ensuit une usure des parties sommitales des filets des vis, c'est-à-dire des parties des filets situées au plus près et en regard de la paroi interne du cylindre de malaxage. Le même phénomène se produit sur les parties en relief des têtes d'extrusion destinées à pousser la matière plastifiée à l'extérieur de l'extrudeuse.

Ce problème d'usure des filets de vis est bien connu et il a été proposé, pour augmenter la durée de vie des pièces mobiles pouvant frotter contre des parties fixes tout en maintenant un faible prix de revient, des vis d'extrudeuses dont les parties sommitales des filets sont pourvues d'un revêtement à base d'un alliage métallique dont la caractéristique en usure est améliorée par rapport à celle du matériau de base constitutif du filet. On emploie par exemple des alliages dénommés Stellite 6 ou Stellite 12 dont les caractéristiques de dureté et d'usure permettent d'améliorer de façon sensible la durée de vie des vis d'extrudeuses.

Un procédé de revêtement connu consiste à réaliser, après fabrication de la vis un dépôt d'alliage par soudure; une opération de finition est nécessaire et consiste en une rectification des surfaces de filet pour obtenir l'état de surface et les cotes désirées. Il est à noter que, compte tenu de la dureté élevée du revêtement, cet usinage nécessite un outillage spécifique et qu'en conséquence l'opération de rectification est rendue plus difficile de ce fait.

L'expérience a montré que le dépôt d'un matériau de dureté maximale est préférable du point de vue de l'usure; toutefois les revêtements de dureté élevée, très performant en usure, présentent l'inconvénient d'être fragiles lorsqu'ils sont soumis aux sollicitations mécaniques de cisaillement qui sont par exemple celles rencontrées dans les extrudeuses. Il se produit ce que l'on appelle un phénomène d'écaillage consistant en ce que la surface du revêtement de dureté élevée se fissure dans un plan sensiblement parallèle à la surface sur laquelle agit la sollicitation. Progressivement, il se forme dans le revêtement un écaillage suivi d'un arrachement de fragments dudit revêtement; par fragment, on entend des morceaux de matière de taille sensiblement plus importante que la taille des particules formées habituellement par une usure régulière. Suite à cette fragilisation du dépôt de dureté élevée, il peut se faire que des fragments arrachés au revêtement se retrouvent dans la matière mélangée, ce qui se traduit par la présence d'éléments étrangers de taille relativement importante et pouvant affecter la performance desdits matériaux extrudés dans leur emploi ultérieur. Une conséquence de ce phénomène d'écaillage est qu'il est nécessaire de prévoir, pour éviter la présence de fragments de dépôt dans le matériau extrudé, un dispositif de surveillance de l'état de surface des filets; cette opération de surveillance implique bien entendu des surcoûts. En outre, les pièces revêtues nécessitent d'être renouvelées assez fréquemment; la restauration ou rénovation du dépôt est une opération qui est certes pratiquée mais qui reste néanmoins délicate à mettre en oeuvre avec des matériaux de revêtement de dureté élevée.

Selon un aspect de l'invention, il est proposé dans la revendication 1 un procédé de revêtement d'une paroi sommitale d'au moins une partie en relief sur la paroi externe d'un noyau tournant à l'intérieur d'un corps cylindrique creux présentant une paroi interne en regard de ladite paroi externe dudit noyau. La paroi sommitale est située au plus près du corps cylindrique creux comparativement aux autres points de la surface de paroi externe du noyau et est limitée par des parois latérales, l'intersection de chacune desdites parois latérales avec ladite paroi sommitale formant une arête destinée à couper (c'est-à-dire à cisailler) un matériau pouvant être plastifié par un travail mécanique.

Le procédé de revêtement des parties sommitales selon l'invention, conférant à ladite partie des propriétés d'endurance améliorées par rapport à celles habituellement obtenues avec les procédés connus, comporte les étapes suivantes :
- on dépose un premier matériau de dureté D 1 sur et au voisinage d'au moins une arête de la partie sommitale de chaque partie en relief à revêtir et sur une fraction seulement de la largeur de ladite partie sommitale;
- on dépose un deuxième matériau de dureté D2 sur le reste de la partie sommitale non revêtue, ladite dureté D2 étant strictement supérieure à la dureté D1;
- on rectifie les dépôts réalisés aux étapes précédentes de façon à obtenir le profil et les cotes de chaque partie en relief sur le noyau.

La largeur de la partie sommitale est définie comme la dimension mesurée suivant une direction parallèle à l'axe de rotation de la pièce à revêtir.

Le procédé selon l'invention s'applique tout autant à la fabrication de pièces neuves qu'à la rénovation de pièces de malaxage et/ou d'extrudeuse après usure consécutive à une utilisation.

Le dépôt du matériau de dureté strictement inférieure à celle de l'autre matériau peut être aussi bien réalisé avant ou après le dépôt de l'autre matériau. Préférentiellement, le matériau déposé sur et au voisinage d'au moins une arête est un matériau métallique obtenu, par exemple, en déposant un cordon de soudure.

De façon à obtenir une performance optimale, il est avantageux que le deuxième matériau de dureté D2 composant le revêtement soit un matériau choisi parmi les matériaux métalliques à base nickel de dureté élevée ou parmi les matériaux céramiques de dureté élevée.

L'invention a également trait à une vis d'extrudeuse selon la revendicshion 4.

De manière préférentielle, le matériau de revêtement, sur et au voisinage de l'arête de la partie sommitale, effectuant le travail de cisaillement de la matière à plastifier et/ou à extruder, a une dureté D 1 inférieure d'au moins 5 HRc à la dureté D2 du matériau de revêtement recouvrant le reste de ladite partie sommitale.

Le revêtement obtenu par le procédé selon l'invention permet d'améliorer de façon sensible la résistance à l'abrasion par frottement tout en réduisant l'apparition du phénomène d'écaillage des revêtement usuels.

Un avantage du revêtement conforme à l'invention est qu'il permet d'élargir les possibilités de choix des matériaux de recouvrement puisqu'il est alors possible d'employer des matériaux très durs dans des zones présentant peu de risque d'écaillage, lesdits matériaux pouvant être choisis, par exemple, parmi des matériaux à base nickel ou parmi des matériaux céramiques.

Des variantes de la présente invention, qui ne doivent être considérées que comme des exemples aidant à la compréhension de l'invention, sont décrites ci-après à l'aide du dessin accompagnant la présente description et suivant lequel :
- la figure **1** montre une coupe schématique d'une vis pour extrudeuse comportant un filet revêtu sur sa partie sommitale d'un revêtement selon l'invention;
- la figure **2** montre une coupe d'un filet d'une vis d'extrudeuse en cours de rénovation selon le procédé de l'invention.

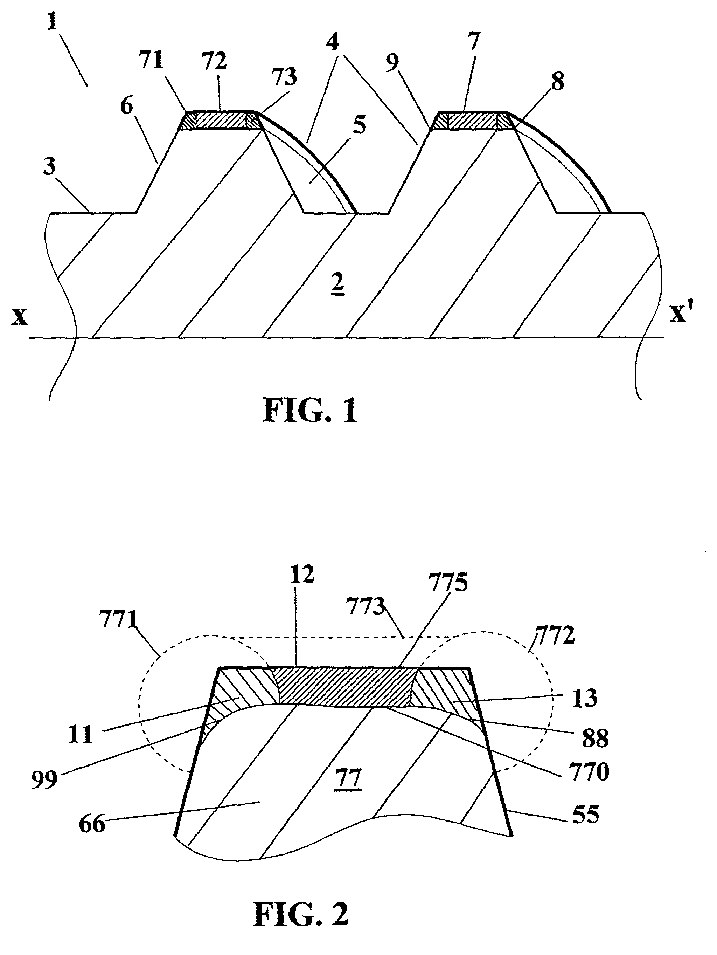

Une partie seulement d'une vis d'extrudeuse 1 selon l'invention est représentée à la figure **1** suivant laquelle cette vis 1 est constituée d'un noyau métallique 2 ayant la forme d'un cylindre allongé d'axe XX' et comportant sur sa paroi externe 3 un filet 4 enroulé en hélice autour du même axe XX'.

Ce filet 4 est délimité par deux parois latérales 5 et 6 prenant appui sur la paroi externe du noyau 2 et par une partie sommitale 7 située entre lesdites deux parois latérales 5 et 6. Dans l'exemple présenté à la figure 1, la partie sommitale 7 du filet 4 est cylindrique et concentrique à la paroi externe 3 du noyau 2; cette paroi sommitale 7 est destinée, une fois la vis 1 en place dans le corps de malaxage d'une extrudeuse, à être située au plus près de la paroi interne dudit corps de malaxage (non représenté ici).

Pour augmenter la durée de vie sur usure du filet 4 de cette vis 1, la partie sommitale 7 de largeur égale environ à 15 mm est pourvue d'une couche de revêtement d'une épaisseur voisine de 1.5 mm, ladite couche selon l'invention étant formée, vu dans la direction de l'axe XX', de trois parties placées côte à côte dans le sens XX'. Une première partie 71 et une troisième partie 73, constituées toutes les deux d'un alliage métallique de dureté D1, recouvrent la paroi sommitale 7 du filet 4 au voisinage des deux arêtes 8 et 9 déterminées respectivement par l'intersection des parois latérales 5 et 6 du filet 4 avec ladite partie sommitale 7; une deuxième partie 72 composée d'un second alliage métallique de dureté D2, D2 étant strictement supérieure à D1 dans l'exemple présenté, recouvre la partie de la paroi sommitale 7 située entre les arêtes 8 et 9 et non recouverte par la première partie 71 et la troisième partie 73 pour former le revêtement.

On obtient ainsi une vis 1 pour extrudeuse comportant un filet 4 pourvu d'un revêtement performant vis-à-vis de l'usure par contact et vis-à-vis du phénomène d'écaillage sous les fortes sollicitations de cisaillement résultant du travail de malaxage et/ou d'extrusion des matières à extruder.

Préférentiellement, l'écart de dureté est au moins de 5HRc. De manière à obtenir un revêtement assurant une protection efficace et durable, on utilise des épaisseurs de revêtement allant de 0.5 mm à 4 mm.

Dans une variante de l'exemple présenté, les matériaux de revêtement sont des alliages à base de nickel (avantageux du point de vue des caractéristiques de soudage et de malléabilité donc de mise en forme) et présentent des duretés, pour les parties proches des arêtes, au plus égales à 52 HRc (mesurée sur l'échelle de Rockwell) tandis que pour la partie intermédiaire du revêtement, l'alliage choisi a une dureté voisine de 62 HRc.

Dans une autre variante avantageuse de l'exemple présenté, il est proposé d'employer des alliages métalliques à base nickel chargés avec du tungstène dans des proportions pouvant aller de 30 à 60% de façon à réaliser un matériau composite présentant une résistance améliorée à l'usure par la présence de charge tungstène de très haute dureté (supérieure à 70HRc); un alliage chargé en tungstène sera préférentiellement placé au moins sur la partie intermédiaire du revêtement.

Une autre variante intéressante de revêtement consiste à employer pour au moins la partie intermédiaire dudit revêtement un matériau de type céramique connu pour ses caractéristiques de dureté élevée et son faible coefficient de frottement; cette disposition offre également la possibilité, à performance en usure conservée, d'une réduction sensible de l'épaisseur dudit revêtement.

Les dispositions précédemment décrites sont transposables à toute pièce comportant des parties susceptibles de s'user plus ou moins rapidement et nécessitant la mise en oeuvre d'un revêtement permettant de retarder ladite usure sans pour autant être limité dans le choix du matériau de revêtement au moins pour une partie des surfaces de paroi à recouvrir.

Sur la figure 2 est représentée une partie seulement d'un filet 77 d'une vis d'extrudeuse vue en coupe transversale suivant un plan contenant l'axe de rotation de la vis portant ledit filet. Le filet 77 de la figure 2 correspond à un filet sur lequel on a représenté de façon superposée les différentes étapes du procédé selon l'invention pour permettre une meilleure compréhension dudit procédé.

La courbe 770 correspond au contour de la partie sommitale du filet 77 après une usure dudit filet nécessitant une rénovation de ladite paroi sommitale. Sous cette forme usée, le filet est préalablement soumis à un examen pour contrôler l'absence de toute fissure avant d'être éventuellement soumis à une légère rectification par usinage de la surface sommitale dudit filet avant de mettre en oeuvre les étapes du procédé selon l'invention de la façon suivante :
- on dépose un premier cordon 11 et un deuxième cordon 13 d'un alliage métallique de dureté D1 sur et au voisinage des arêtes 88 et 99 du filet 77 usé (on a représenté schématiquement les contours 771 et 772 desdits cordons sous la forme de courbes partiellement en traits pointillés);
- ensuite, on dépose un deuxième alliage métallique de dureté D2, D2 étant strictement supérieure à D1, sur la partie intermédiaire 12 de la partie sommitale du filet délimitée par les deux cordons 11 et 13 (le contour externe 773 de cette partie intermédiaire est montré en traits pointillés);
- on achève la rénovation du filet 77 en réalisant une rectification de la paroi sommitale, ainsi qu'un affleurage des soudures sur les parois latérales 55 et 66 dudit filet de manière à obtenir la forme et les cotes désirées pour ledit filet (le contour 775 de cette forme finale est représenté en traits pleins sur la figure 2).

En pratique, on procède au dépôt des cordons métalliques sur la partie sommitale du filet notamment par soudure TIG (Tungsten Inert Gas), ou encore avec un robot de soudure MIG (Metal Inert Gas) ou par soudure PTA (Plasma Transfer Arc). Ce dernier procédé de dépôt par soudure permet d'obtenir un alliage très pur tout en limitant le phénomène de dilution du métal apporté dans le métal de base formant le filet.

Enfin, il a été constaté, sur des vis destinées à tourner toujours dans le même sens pour effectuer le travail de plastification et/ou pour extruder la matière plastifiée, qu'il était suffisant de recouvrir la partie sommitale d'un filet de vis uniquement au voisinage de l'arête d'attaque de ladite partie avec un revêtement dont la dureté est inférieure à celle du revêtement sur le reste de la partie sommitale y compris l'autre arête. Cette solution est particulièrement intéressante dans le cas de filet de vis de faible largeur, c'est-à-dire de largeur inférieure à environ 15 mm. Par arête d'attaque d'une vis, on entend l'arête la plus proche de la sortie de la matière extrudée, ladite arête exerçant la majorité des efforts de cisaillement sur la matière à plastifier.

## Revendications

1. Procédé de revêtement d'une partie en relief faisant saillie sur la paroi externe d'un noyau (2) destiné à plastifier et/ou extruder une matière pouvant être plastifiée, ledit noyau (2) étant monté tournant à l'intérieur d'un corps cylindrique creux présentant une paroi interne en regard de la paroi externe du noyau, ladite partie en relief (4) comportant une paroi sommitale (7) limitée par des parois latérales (5,6), l'intersection entre chacune desdites parois latérales (5,6) et ladite paroi sommitale (7) formant une arête (8, 9) destinée à couper le matériau pendant le travail de plastification, et ladite partie en relief (4) étant placée de manière à ce que sa partie sommitale (7) soit située au plus près du corps cylindrique creux comparativement aux autres points de la surface de paroi externe du noyau, **caractérisé en ce que** ledit procédé de revêtement comporte les étapes suivantes :
- on dépose un premier matériau de dureté D1 sur et au voisinage d'au moins une arête (8, 9) de la partie sommitale (7) de chaque partie en relief (4) à revêtir et sur une fraction seulement de la largeur de ladite partie sommitale;
- on dépose un deuxième matériau de dureté D2 sur le reste de la partie sommitale (7) non revêtue, ladite dureté D2 étant strictement supérieure à la dureté D1;
- on rectifie les dépôts réalisés aux étapes précédentes de façon à obtenir le profil et les cotes de chaque partie en relief sur le noyau.

2. Procédé selon la revendication 1 **caractérisé en ce que** le deuxième matériau de dureté D2 composant le revêtement est choisi parmi les matériaux métalliques à base nickel ou parmi les matériaux céramiques de dureté élevée.

3. Procédé selon la revendication 2 **caractérisé en ce que** le dépôt d'au moins un matériau composant le revêtement est réalisé par soudure.

4. Vis d'extrudeuse (1) comportant au moins une partie en relief (4) faisant saillie sur un noyau (2) prévu pour être monté en rotation à l'intérieur d'un cylindre d'extrudeuse et destinée soit au travail de plastification d'une matière pouvant être plastifiée soit à l'extrusion proprement dite de ladite matière après plastification, ladite partie en relief comportant une paroi sommitale (7) limitée par des parois latérales (5), (6), l'intersection entre chacune desdites parois latérales et ladite paroi sommitale (7) formant une arête (8, 9) destinée à couper le matériau pendant le travail de plastification la paroi sommitale (7) de ladite partie en relief (4) étant pourvue d'un revêtement **caractérisé en ce qu'**il est composé d'au moins deux matériaux de duretés D1 et D2 strictement différentes, lesdits matériaux étant placés côte à côte sur ladite paroi sommitale (7), le matériau de dureté moindre étant placé sur au moins une des arêtes (8, 9).

5. Vis d'extrudeuse (1) selon la revendication 4 **caractérisée en ce que** le matériau de revêtement situé sur et au voisinage d'au moins une arête (8, 9) formée par l'intersection de la partie sommitale (7) d'une partie en relief (4) et d'une paroi latérale (5, 6) de ladite partie en relief (4) présente une dureté D1 inférieure d'au moins 5 HRc à la dureté D2 du deuxième matériau de revêtement.

6. Vis d'extrudeuse (1) selon la revendication 4 **caractérisée en ce que** le matériau de revêtement situé sur et au voisinage de chaque arête (8, 9) présente une dureté D1 inférieure d'au moins 5 HRc à la dureté D2 du matériau de revêtement recouvrant la partie intermédiaire du sommet du filet située entre lesdites arêtes.

7. Vis d'extrudeuse (1) selon les revendications 5 ou 6 **caractérisée en ce que** le matériau de revêtement sur et au voisinage d'au moins une arête (8, 9) a une dureté D1 au plus égale à 52 HRc.

8. Vis d'extrudeuse (1) selon l'une des revendications 4 à 7 **caractérisée en ce que** l'un au moins des matériaux de revêtement est un alliage à base nickel.

9. Vis d'extrudeuse (1) selon la revendication 8 **caractérisée en ce que** l'un au moins des matériaux de revêtement est un alliage à base nickel chargé en tungstène.

10. Vis d'extrudeuse (1) selon l'une des revendications 4 à 8 **caractérisée en ce que** l'un au moins des matériaux de revêtement est un matériau de type céramique.

## Patentansprüche

1. Verfahren zum Verkleiden eines erhabenen Bereichs, der auf der Außenwand eines Kerns (2) vorsteht, der zum Plastifizieren und/oder Extrudieren eines plastifizierbaren Werkstoffs bestimmt ist, wobei der Kern (2) innerhalb eines zylindrischen Hohlkörpers drehend angeordnet ist, der eine Innenwand gegenüber der Außenwand des Kerns aufweist, wobei der erhabene Bereich (4) eine obere Endwand (7) aufweist, die von Seitenwänden (5, 6) begrenzt wird, wobei die Schnittstelle zwischen jeder der Seitenwände (5,6) und der oberen Endwand (7) eine Kante (8, 9) bildet, die dazu bestimmt ist, das Material während der Plastifizierungsarbeit zu schneiden, und der erhabene Bereich (4) so angeordnet ist, daß sein oberer Endbereich (7) im Vergleich mit den anderen Punkten der Oberfläche der Außenwand des Kerns dem zylindrischen Hohlkörper am nächsten liegt, **dadurch gekennzeichnet, daß** das Verfahren zum Beschichten die folgenden Schritte aufweist:
- auf und in der Nähe mindestens einer Kante (8, 9) des oberen Endbereichs (7) jedes zu beschichtenden, erhabenen Bereichs (4) und nur über einen Bruchteil der Breite des oberen Endbereichs wird ein erstes Material mit einer Härte D 1 aufgetragen;
- auf den nicht beschichteten Rest des oberen Endbereichs (7) wird ein zweites Material mit einer Härte D2 aufgetragen, wobei die Härte D2 unbedingt größer ist als die Härte D1;
- die in den vorhergehenden Schritten aufgebrachten Schichten werden so abgeschliffen, daß das Profil und die Maße jedes erhabenen Bereichs des Kerns erhalten werden.

2. Verfahren nach Anspruch 1, **dadurch gekennzeichnet, daß** das zweite zur Beschichtung gehörende Material mit einer Härte D2 aus den metallischen Materialien auf der Basis von Nickel oder aus den Keramikmaterialien großer Härte ausgewählt wird.

3. Verfahren nach Anspruch 2, **dadurch gekennzeichnet, daß** das Aufbringen mindestens eines zur Beschichtung gehörenden Materials durch einen Schweißvorgang erfolgt.

4. Extruderschnecke (1), die mindestens einen erhabenen Bereich (4) aufweist, der auf einem Kern (2) vorsteht, der vorgesehen ist, um innerhalb eines Extruderzylinders drehend angeordnet zu werden und der entweder zur Arbeit der Plastifizierung eines plastifizierbaren Werkstoffs oder zum eigentlichen Extrudieren dieses Werkstoffs nach Plastifizierung bestimmt ist, wobei der erhabene Bereich (4) eine obere Endwand (7) aufweist, die von Seitenwänden (5,6) begrenzt wird, wobei die Schnittstelle jeder der Seitenwände (5,6) mit der oberen Endwand (7) eine Kante (8, 9) bildet, die dazu bestimmt ist, das Material während der Plastifizierungsarbeit zu schneiden, wobei die obere Endwand (7) des erhabenen Bereichs (4) mit einer Beschichtung versehen ist, **dadurch gekennzeichnet, daß** sie aus mindestens zwei Materialien mit unbedingt unterschiedlichen Härten D 1 und D2 besteht, wobei die Materialien nebeneinander auf der oberen Endwand (7) angeordnet sind, wobei das Material mit geringerer Härte sich auf mindestens einer der Kanten (8, 9) befindet.

5. Extruderschnecke (1) nach Anspruch 4, **dadurch gekennzeichnet, daß** das Beschichtungsmaterial auf und in der Nähe mindestens einer Kante (8, 9), die durch die Schnittstelle zwischen dem oberen Endbereich (7) eines erhabenen Bereichs (4) und einer Seitenwand (5, 6) des erhabenen Bereichs (4) gebildet wird, eine Härte D1 aufweist, die um mindestens 5 HRc unter der Härte D2 des zweiten Beschichtungsmaterials liegt.

6. Extruderschnecke (1) nach Anspruch 4, **dadurch gekennzeichnet, daß** das Beschichtungsmaterial auf und in der Nähe jeder Kante (8, 9) eine Härte D1 aufweist, die um mindestens 5 HRc unter der Härte D2 des Beschichtungsmaterials liegt, das den Zwischenbereich des Scheitels des Gewindes bedeckt, der zwischen den Kanten liegt.

7. Extruderschnecke (1) nach den Ansprüchen 5 oder 6, **dadurch gekennzeichnet, daß** das Beschichtungsmaterial auf und in der Nähe mindestens einer Kante (8, 9) eine Härte D1 höchstens gleich 52 HRc aufweist.

8. Extruderschnecke (1) nach einem der Ansprüche 4 bis 7, **dadurch gekennzeichnet, daß** mindestens eines der Beschichtungsmaterialien eine Legierung auf Nickelbasis ist.

9. Extruderschnecke (1) nach Anspruch 8, **dadurch gekennzeichnet, daß** mindestens eines der Beschichtungsmaterialien eine Legierung auf der Basis von mit Wolfram angereichertem Nickel ist.

10. Extruderschnecke (1) nach einem der Ansprüche 4 bis 8, **dadurch gekennzeichnet, daß** mindestens eines der Beschichtungsmaterialien ein Material vom Typ Keramikmaterial ist.

## Claims

1. A process of coating a raised part projecting on the outer wall of a core (2) intended to plasticise and/or extrude a material capable of being plasticised, said core (2) being rotatably mounted inside a hollow roll barrel having an inner wall opposite the outer wall of the core, said raised part (4) comprising a crown wall (7) limited by side walls (5, 6) , the intersection between each of said side walls (5, 6) and said crown wall (7) forming an edge (8, 9) intended to cut the material during the work of plasticisation, and said raised part (4) being so placed that its crown part (7) is situated as close as possible to the hollow roll barrel, by comparison with the other points of the outer wall surface of the core, said coating process comprising the following steps:
- a first material of hardness Dl is deposited on and in proximity to at least one edge (8, 9) of the crown part (7) of each raised part (4) to be coated and on only a fraction of the width of said crown part;
- a second material of hardness D2 is deposited on the rest of the uncoated crown part (7), said hardness D2 being strictly greater than the hardness D1;
- the depositions made in the preceding stages are ground in order to obtain the profile and the dimensions of each raised part on the core.

2. A process according to Claim 1, **characterised in that** the second material of hardness D2 of which the coating is composed is selected from among nickel-based metal materials or from among ceramic materials of elevated hardness.

3. A process according to Claim 2, **characterised in that** the deposit of at least one material of which the coating is composed is carried out by welding.

4. An extruder screw (1) comprising at least one raised part (4) projecting on a core (2) intended to be rotatably mounted inside an extruder roll and intended either for plasticising a material capable of being plasticised or for extruding said material after plasticisation, said raised part comprising a crown wall (7) and side walls (5, 6) , the intersection between each of said side walls and said crown wall (7) forming an edge (8, 9) intended to cut the material during plasticisation, the crown wall (7) of said raised part (4) is provided with a coating, **characterised in that** consisting of at least two materials of strictly different hardnesses D1 and D2, said materials being placed side by side on said crown wall (7), the material of lesser thickness being placed on at least one of the edges (8, 9).

5. An extruder screw (10) according to Claim 4, **characterised in that** the coating material placed on and in proximity to at least one edge (8, 9) formed by the intersection of the crown part (7) of a raised part (4) and a side wall (5, 6) of said raised part (4) has a hardness D1 at least 5HRc less than the hardness D2 of the second coating material.

6. An extruder screw (1) according to Claim 4, **characterised in that** the coating material placed on and in proximity to each edge (8, 9) has a hardness D1 at least 5 HRc less than the hardness D2 of the coating material covering the intermediate part of the crown of the thread situated between said edges.

7. An extruder screw (1) according to Claims 5 or 6, **characterised in that** the coating material on and in proximity to at least one edge (8, 9) has a hardness D1 equal at most to 52 HRc.

8. An extruder screw (1) according to one of Claims 4 to 7, **characterised in that** at least one of the coating materials is a nickel-based alloy.

9. An extruder screw (1) according to Claim 8, **characterised in that** at least one of the coating materials is a tungsten-filled nickel-based alloy.

10. An extruder screw (1) according to one of Claims 4 to 8, **characterised in that** at least one of the coating materials is a ceramic-type material.
